# EUROPÄISCHE PATENTSCHRIFT

(11) **EP 4 031 404 B1**
(45) Veröffentlichungstag und Bekanntmachung des Hinweises auf die Patenterteilung: **20.12.2023**
(21) Anmeldenummer: 20793239.3
(22) Anmeldetag: 15.09.2020
(51) Int. Cl.: B60L 53/30, B60L 53/66, G06Q 20/14, G07F 15/00

(54) **LADEANSCHLUSSVORRICHTUNG MIT ENERGIEMESSVORRICHTUNG FÜR ELEKTROFAHRZEUGE**
CHARGING CONNECTION DEVICE COMPRISING AN ENERGY-MEASURING DEVICE FOR ELECTRIC VEHICLES
DISPOSITIF DE PRISE DE CHARGE À DISPOSITIF DE MESURE D'ÉNERGIE POUR VÉHICULES ÉLECTRIQUES

(30) Priorität: 16.09.2019 DE 102019006541
(43) Veröffentlichungstag der Anmeldung: 27.07.2022
(73) Patentinhaber: KEBA Energy Automation GmbH, 4040 Linz (AT)
(72) Erfinder: WEIDINGER, Gerhard, 4614 Marchtrenk (AT); EILMSTEINER, Heribert, 4020 Linz (AT)
(74) Vertreter: Burger, Hannes
(86) Internationale Anmeldenummer: PCT/AT2020/060332
(87) Internationale Veröffentlichungsnummer: WO 2021/051147

(56) Entgegenhaltungen:
- EP-A1- 2 612 783
- WO-A1-2018/115363
- DE-A1-102010 043 516
- DE-A1-102017 100 523

## Beschreibung

Die Erfindung betrifft eine Ladeanschlussvorrichtung für Elektrofahrzeuge in Kombination mit einer Energiemessvorrichtung, wie dies in den Ansprüchen angegeben ist.

Es ist allgemein bekannt, dass zum Aufladen bzw. Regenerieren des Energiespeichers eines elektrisch betriebenen Fahrzeuges ein solches Fahrzeug für eine gewisse Zeit abgestellt und mit einer elektrischen Energiequelle, üblicherweise dem örtlich vorhandenen Stromnetz, elektrisch verbunden wird. Moderne elektrische Fahrzeuge haben dabei mittlerweile eine akzeptable Reichweite von mehreren 100km, die mit einem voll aufgeladenen Energiespeicher zurückgelegt werden können, und weiters eine entsprechend hohe Antriebsleistung in der Größenordnung von 100kW oder mehr, was eine komfortable und rasche Fortbewegung ermöglicht.

Im Vergleich zu Fahrzeugen, welche Verbrennungskraftmaschinen für den Antrieb nutzen und während nur sehr kurzer Stillstandszeit in der Regel mit einem flüssigen oder gasförmigen Energieträger betankt werden, dauert der Ladevorgang der heute für Elektrofahrzeuge üblichen elektrochemischen Energiespeicher relativ lange. Um die Einsatzzeit bzw. Verfügbarkeit eines elektrischen Fahrzeuges zu verbessern, wird daher danach getrachtet, die Ladezeit möglichst kurz zu halten, wofür jedoch während dem Ladevorgang eine erhebliche elektrische Leistung benötigt wird. Diese muss vom elektrischen Netz bezogen, typischerweise über die Ladeelektronik im Fahrzeug umgewandelt und schließlich in den Energiespeicher des Fahrzeuges übertragen werden. Die Größenordnung der Ladeleistung liegt heute im Bereich von bis zu 22kW oder auch mehr, und ist damit deutlich höher als die elektrische Leistung, die beispielsweise von einer üblichen Haushaltssteckdose bezogen werden kann. Elektrisch betriebene Kraftfahrzeuge stellen also im Vergleich zu anderen in Haushalten üblichen, elektrischen Verbrauchern durchaus Großverbraucher dar. Selbst wenn ein Stromanschluss mit prinzipiell ausreichend hoher elektrischer Anschlussleistung zur Verfügung steht, kann es aufgrund der Gesamtbelastung in Teilen des Stromnetzes zu zeit- oder situationsabhängigen Einschränkungen bei der tatsächlich verfügbaren Leistung kommen.

Für den Ladevorgang elektrischer Kraftfahrzeuge - soweit es sich nicht um Kleinfahrzeuge in der Art eines Elektrofahrrades oder um Vergleichbares handelt - sind daher spezielle Ladeanschlussvorrichtungen erforderlich oder zumindest zweckmäßig, welche im Gegensatz zu einer herkömmlichen Steckdose nicht nur eine entsprechend hohe elektrische Anschlussleistung bereitstellen bzw. übertragen können, sondern auch zusätzliche Kommunikationsmittel aufweisen, mit denen die Ladeelektronik eines angeschlossenen Fahrzeuges die tatsächlich jeweils beziehbare Ladeleistung ermitteln kann bzw. auf die aktuelle Netzsituation reagieren kann, ohne das Netz bzw. die Zuleitung zu überlasten und damit eine Abschaltung zu verursachen. Weiters sind in solchen Ladeanschlussvorrichtungen eine Reihe von Sicherheitseinrichtungen implementiert, beispielsweise eine Sperrvorrichtung, die ein unbefugtes Abstecken oder ein Abstecken unter Volllast mit entsprechender Lichtbogenbildung verhindert. Die entsprechenden Ladeanschlussvorrichtungen sorgen typischerweise auch dafür, dass beim Auftreten von Fehlerströmen, bei Überlast und fallweise bei unzulässigen Rückspeiseströmen abgeschaltet bzw. entsprechend signalisiert wird.

Derartige Ladeanschlussvorrichtungen werden beispielsweise in den Druckschriften US 4,532,418 A, DE 42 13 414 C2, FR 2 766 950 A1, JP 11-122714 A, US 6,362,594 B2, WO 2007/141543 A2, WO 2010/011545 A1, WO 2010/133959 A2 und AT 507 605 A1 beschrieben.

Die WO 2018/115363 A1 beschreibt eine Ladevorrichtung für Elektrofahrzeuge, welche als baulich eigenständiger Zwischenadapter zwischen einer allgemeinen Elektrofahrzeug-Ladeschnittstelle und einem Ladekabel eines zu ladenden Elektrofahrzeuges ausgeführt ist. Diese Ladevorrichtung umfasst elektrotechnische Komponenten entsprechend dem einleitenden Teil des Anspruches 1. Auf dem Display dieser Ladevorrichtung werden nacheinander diverse Hinweise zur Bedienung der Ladevorrichtung, als auch der Preis für die während eines Ladevorganges bezogene Energiemenge angezeigt.

Auch die DE 10 2010 043516 A1 beschreibt eine Ladeanschlussvorrichtung für Elektrofahrzeuge. Die Steuerungseinheit der Ladeanschlussvorrichtung ist über eine erste Datenleitung mit der Batterie, einem ersten Gleichspannungswandler, einem Energiezähler, einem Stromrichter, einem zweiten Gleichspannungswandler sowie einer Bedieneinheit verbunden. Über die erste Datenleitung können Informationen von diesen Einheiten empfangen und Informationen und Steuerungsanweisungen an diese ausgegeben werden. So kann z.B. die Information der entnommenen Leistung von dem Energiezähler empfangen und über eine Anzeigeeinheit der Bedieneinheit an den Benutzer ausgegeben werden.

Die EP 2 612 783 A1 beschreibt eine Vorrichtung und ein Verfahren zum Laden und/oder Entladen von Hybrid- oder Elektrofahrzeugen. Diese Vorrichtung weist eine Ausgangsschnittstelle auf, welche mit einer On-Board-Ladeeinheit des Fahrzeuges verbindbar ist. Eine Informations-Austauscheinheit tauscht Informationen mit dem Fahrzeug aus. Eine Steuervorrichtung kontrolliert den Ladevorgang des Fahrzeuges. Eine Datenspeicher- und Übertragungseinheit speichert und überträgt Daten an eine Plattform für die Verrechnung der von einem Benutzer bezogenen Energie. Diese Plattform ist über das Internet erreichbar. Die Steuervorrichtung umfasst eine Planungseinheit zur Planung von Lade- und/oder Entladevorgängen. Die Vorrichtung beinhaltet Wirk- und Blindleistungsmessmittel hinsichtlich der verbrauchten oder produzierten Energie und Mittel zur Berechnung der verbrauchten Energie. Die verbrauchte Energiemenge kann in Geldform umgerechnet werden. Über die Datenschnittstelle ermöglicht die Vorrichtung die Anzeige der Ladedaten und der Geldwerte in Echtzeit.

Die DE 10 2017 100523 A1 beschreibt ein Betriebsverfahren für eine zum Bereitstellen elektrischer Energie für elektrisch betreibbare Fahrzeug ausgebildete Ladestation mit einem Rechenmodul, mit einem geeichten Energiezähler, welcher Energiezähler eine Anzeigeeinrichtung für eine über den Energiezähler in der Vergangenheit insgesamt zur Verfügung gestellte Gesamtenergiemenge aufweist, wobei die Anzeigeeinrichtung des Energiezählers in der Ladestation derart vorgesehen wird, dass ein Nutzer der Ladestation die angezeigte Gesamtenergiemenge ablesen kann. Darüber hinaus ist ein Kommunikationsmodul umfassend ein zur Anzeige von Daten ausgebildetes Display vorgesehen, wobei während des Ladevorgangs mittels des Energiezählers eine über die Ladestation bereitgestellte Energiemenge erfasst wird und zur Weiterverarbeitung an das Rechenmodul übertragen und/oder gespeichert wird, wobei von dem Rechenmodul unter Verwendung eines dem Ladevorgang zugeordneten Zahlenwertarrays umfassend eine zu Beginn des Ladevorgangs angezeigten Anfangsenergiemenge und/oder einer am Ende des Ladevorgangs angezeigten Endenergiemenge und/oder eine aus der Anfangsenergiemenge und aus der Endenergiemenge ermittelte, während des Ladevorgangs in einen Energiespeicher des Fahrzeugs eingespeiste Ladeenergiemenge und/oder ein Datum für den Ladevorgang und/oder eine Uhrzeit für den Ladevorgang und/oder einen Wertbetrag für die Ladeenergiemenge ein Grafik- und/oder Textabbild einer Quittung für den Ladevorgang erzeugt wird.

Der Stromanschluss, sowohl netzseitig als auch fahrzeugseitig, ist aufgrund der hohen zu übertragenden Leistung in der Regel als dreiphasiger bzw. mehrphasiger Starkstromanschluss mit entsprechend großen Leitungsquerschnitten von typisch 4 bis 6 mm², fallweise aber auch mit bis zu 16 mm² ausgeführt. Zweckmäßigerweise sind die Ladeanschlussvorrichtungen in unmittelbarer Nähe zu den Abstellplätzen der jeweiligen Elektrofahrzeuge installiert, wobei es sich üblicherweise um Garagen, Tiefgaragen, überdachte Parkflächen und dergleichen handelt, welche privat, fallweise aber auch öffentlich zugänglich oder zumindest für eine größeren Personenkreis zugänglich sein können.

Das Gehäuse solcher Ladeanschlussvorrichtungen muss dabei die hantierenden Personen vor dem Kontakt mit spannungsführenden Teilen im Innenraum bzw. vor lebensgefährlichen Stromschlägen schützen. Darüber hinaus schützt das Gehäuse die innenliegenden elektrischen und elektronischen Komponenten vor mechanischer Beschädigung sowie Schmutz und Feuchtigkeit und weiteren im Umfeld von Fahrzeugen zu erwartenden Stoffen, wie beispielsweise Streusalz oder vergleichbar wirkende Auftaumittel, und stellt damit deren dauerhaft zuverlässige Funktion sicher.

Die Ladestationen neuerer Art werden bereits als relativ kompakte Einheiten gefertigt, deren Funktion und Sicherheit vor der Auslieferung geprüft wird. Alle für die Funktion und Sicherheit der Einheit relevanten Komponenten sind in diesem geschlossenen Gehäuse angeordnet und damit vor Beschädigung oder Manipulation geschützt. Üblicherweise sind auch nur die Anschlussklemmen für den Anschluss an das Stromnetz und gegebenenfalls Schnittstellen für eine Anbindung an Kommunikationsnetze über separat abnehmbare Gehäuseteile für den mit der Installation und Inbetriebnahme betrauten Fachmann zugänglich. Dieser ist verantwortlich für die ordnungsgemäße Installation bzw. Montage und den Anschluss an das Stromnetz.

Mit zunehmender Verbreitung von Elektrofahrzeugen besteht auch der Wunsch bzw. das Erfordernis einer öffentlich verfügbaren bzw. allgemein zugänglichen Ladeinfrastruktur. In diesem Zusammenhang wird es zunehmend auch erforderlich sein, die von Energieversorgungsunternehmen bzw. Netzbetreibern bereitgestellte elektrische Energie unter anderem in Abhängigkeit des jeweiligen Verbrauchs in Rechnung zu stellen. Diesen Anforderungen entsprechende Ladeanschlussvorrichtungen können darüber hinaus Mittel zur Autorisierung bzw. Freigabe des Energiebezugs beinhalten, beispielsweise via einen kodierten RFID-Transponder oder via einen Schlüsselschalter, oder technische Identifikationsmittel umfassen, um den Benutzer zu identifizieren bzw. um Informationen für Verrechnungszwecke zu erfassen und gegebenenfalls diese Daten über datentechnische Netzwerkverbindungen mit zentralen Clearing-Stellen auszutauschen. Weiters können solche Ladeanschlussvorrichtungen auch Mittel zur Messung und Überwachung der übertragenen Leistung, des Stromes, oder der Energiemenge beinhalten. Vor allem dann, wenn der Bezug der elektrischen Energie einer Abrechnung unterliegt, ist es besonders wichtig, dass diese Abrechnung stets korrekt und den tatsächlichen Gegebenheiten entsprechend ausgeführt werden kann. Darüber hinaus ist es wünschenswert, wenn die diversen Benutzer solcher Ladeanschlussvorrichtungen durch einfache Maßnahmen den jeweiligen Energiebezug im Zuge eines Ladevorganges bzw. nach Abschluss eines Ladevorganges und/oder die an der Ladeanschlussvorrichtung bislang bezogene Gesamtenergiemenge möglichst unkompliziert evaluieren können bzw. einer einfachen Plausibilisierung unterziehen zu können. Dabei sollen trotz umfangreicher Funktionalitäten der Ladeanschlussvorrichtung die Herstellungskosten möglichst gering gehalten werden, um eine Etablierung der Ladeanschlussvorrichtung bzw. einen Ausbau von öffentlich bzw. allgemein nutzbarer Ladeinfrastruktur zu begünstigen. Dies ist mit den bisher bekannten Systemen nur bedingt zufriedenstellend erzielbar.

Aufgabe der vorliegenden Erfindung war es, die Nachteile des Standes der Technik zu überwinden und eine Vorrichtung zur Verfügung zu stellen, mittels derer der Bezug von elektrischer Energie an einer allgemein zugänglichen Ladeanschlussvorrichtung für einen Betreiber und auch für Benutzer der Ladeanschlussvorrichtung möglichst einfach evaluierbar ist. Weiters sollen solche Ladeanschlussvorrichtungen eine hohe Benutzerfreundlichkeit aufweisen bzw. möglichst unmissverständlich bedienbar sein. Gleichwohl sollen die Kosten zur Schaffung eines derartigen Systems möglichst gering gehalten werden.

Diese Aufgabe wird durch eine Vorrichtung gemäß den Ansprüchen gelöst.

Die erfindungsgemäße Ladeanschlussvorrichtung für Elektrofahrzeuge umfasst:
- zumindest eine erste Schnittstelle zum Beziehen von elektrischer Energie aus einem ortsfesten Stromversorgungsnetz,
- zumindest eine zweite Schnittstelle zur gesteuerten Abgabe von elektrischer Energie an ein Elektrofahrzeug,
- eine elektronische Steuervorrichtung mit welcher ein Ladevorgang eines Elektrofahrzeugs überwachbar und/oder beeinflussbar ist,
- eine Leistungsschaltvorrichtung mit einem ersten Schaltzustand in welchem eine Bereitstellung von elektrischer Energie an der zumindest einen zweiten Schnittstelle freischaltbar ist und mit einem zweiten Schaltzustand in welchem eine Bereitstellung von elektrischer Energie an der zumindest einen zweiten Schnittstelle unterbindbar ist,
- eine Energiemessvorrichtung zum Messen der über die Ladeanschlussvorrichtung an ein Elektrofahrzeug abgegebenen elektrischen Energie,
- ein Display zur Anzeige von mess- und eichrechtlich relevanten Energiemessdaten, welche Energiemessdaten von der Energiemessvorrichtung gemessen wurden,
- ein Gehäuse in welchem wenigstens die elektronische Steuervorrichtung und die Leistungsschaltvorrichtung und gegebenenfalls die Energiemessvorrichtung untergebracht sind, und an welchem Gehäuse das Display zur Anzeige der mess- und eichrechtlich relevanten Energiemessdaten angeordnet ist.

Das selbe Display ist dabei zudem zur Anzeige von Informationen eingerichtet, welche Informationen nicht von der Energiemessvorrichtung stammen und nicht mess- und eichrechtlich relevant sind. In diesem Zusammenhang ist eine Display-Ansteuereinheit ausgebildet, welche dazu eingerichtet ist, eine Anzeige von dem Mess- und Eichrecht unterliegenden, d.h. von mess- und eichrechtlich relevanten, Inhalten oder Symbolen zu unterdrücken, zu ersetzen oder solche Inhalte oder Symbole als nicht mess- und eichrechtskonform zu kennzeichnen, wenn diese Inhalte oder Symbole nicht von der Energiemessvorrichtung stammen bzw. nicht von ihr erfasst oder erstellt wurden.

Unter mess- und eichrechtlich relevanten Daten sind dabei Informationen bzw. Inhalte zu verstehen, welche in länderspezifischen Eichgesetzen und/oder Messrichtlinien definiert sind.

Beispiele dafür sind das Mess- und Eichgesetz bzw. die Mess- und Eichverordnung in Deutschland, oder das Maß- und Eichgesetz in Österreich.

Die erfindungsgemäße Ladeanschlussvorrichtung bringt den Vorteil mit sich, dass das Energiezähler-Display, welches den Betreiber bzw. Benutzer der Ladeanschlussvorrichtung über den Gesamt-Energiebezug und/oder über den Energiebezug eines laufenden oder abgeschlossenen Ladevorganges informiert, gleichzeitig auch zur Anzeige von sonstigen Informationen bzw. Daten genutzt wird. Diese sonstigen Informationen können durch Betriebszustände der Ladeanschlussvorrichtung, durch Handhabungs- oder Warnhinweise, durch Begrüßungstexte, durch Werbebotschaften, oder dergleichen definiert sein. Durch die funktional vorgelagerte Display-Ansteuereinheit ist dabei sichergestellt, dass ein Benutzer bzw. Bediener der Ladeanschlussvorrichtung vor allfälligen Manipulationen bzw. Betrugsversuchen, oder auch vor bloßer Irreführung in Zusammenhang mit den Anzeigeinhalten am Display gut geschützt ist. Insbesondere können dadurch Verwechslungen von mess- und eichrechtlich relevanten Informationen, insbesondere von Energiemessdaten, mit sonstigen Informationen, welche nicht von der Energiemessvorrichtung stammen, also von einer extern Quelle eingespielt werden, hintan gehalten werden. Diese kombinierte Nutzung des Energiezähler-Displays an der Ladeanschlussvorrichtung ermöglicht auch Kostenreduzierungen, nachdem ein zusätzliches Display zur Anzeige sonstiger Informationen eingespart werden kann. Dies bringt auch Vorteile in Bezug auf eine kompakte Ausgestaltung bzw. geringe Baugröße der Ladeanschlussvorrichtung. Darüber hinaus kann dadurch die Anzahl mechanischer Durchbrüche im Gehäuse der Ladeanschlussvorrichtung möglichst gering gehalten werden, was die Dichtheit bzw. Robustheit der Ladeanschlussvorrichtung begünstigen kann.

Ein weiterer Vorteil der erfindungsgemäßen Maßnahmen liegt darin, dass ein Betreiber bzw. Benutzer der Ladeanschlussvorrichtung die relevanten Energiemessdaten vor Ort, also unmittelbar bei der Ladeanschlussvorrichtung, grob evaluieren bzw. einer Plausibilisierung unterziehen kann. Dafür benötigt er keine speziellen, datentechnischen Abfrage- bzw. Kommunikationsmittel, beispielsweise in Form eines Smartphone mit Internetzugriff, nachdem die relevanten Energiemessdaten unmittelbar an der Ladeanschlussvorrichtung angezeigt werden.

Ferner kann es zweckmäßig sein, wenn das Display zur Anzeige des jeweiligen Status der Ladeanschlussvorrichtung, beispielsweise Bereit, Laden, Fehler, oder dergleichen, vorgesehen ist. Alternativ oder in Kombination dazu kann das Display zur Anzeige von Handhabungshinweisen vorgesehen sein. Die genannten Anzeigeinhalte können dabei von der Steuervorrichtung der Ladeanschlussvorrichtung und/oder von einem externen, datentechnischen Verwaltungssystem, insbesondere einem sogenannten "Backend-System" stammen. Dadurch kann eine hohe Benutzerfreundlichkeit der Ladeanschlussvorrichtung erreicht werden.

Insbesondere kann vorgesehen sein, dass die Display-Ansteuereinheit dazu eingerichtet ist, (i) mess- und eichrechtlich relevante Energiemessdaten von der Energiemessvorrichtung und (ii) Informationen, welche nicht von der Energiemessvorrichtung stammen und nicht mess- und eichrechtlich relevant sind, abwechselnd, d.h. zeitlich gestaffelt am Display anzuzeigen. Dadurch ist es möglich, mit einem relativ kleinen und somit auch kostengünstigen Display eine Vielzahl von Informationen zu visualisieren. Unabhängig davon kann dadurch auch die Robustheit der Ladeanschlussvorrichtung begünstigt werden, da relativ kleinflächige Displays geringerer Bruchgefahr unterliegen, als großflächige Anzeigeeinheiten. Dies ist vor allem in Zusammenhang mit der Installation von Ladeanschlussvorrichtungen an öffentlichen bzw. allgemein zugänglichen Stellen von Vorteil. Darüber hinaus weisen relativ kleinflächige Displays in der Regel einen geringeren Energieverbrauch auf.

Entsprechend einer vorteilhaften Weiterbildung kann die Display-Ansteuereinheit dazu eingerichtet sein, die mess- und eichrechtlich relevanten Energiemessdaten regelmäßig und mit einer Mindestanzeigedauer am Display anzuzeigen. Dadurch ist sichergestellt, dass durch häufige Anzeigeinhalte mit funktionalem bzw. informativem Charakter die mess- und eichrechtlich relevanten Informationen nicht überschrieben bzw. nicht unterdrückt werden. Ein sogenannter "Anzeige-Overflow" ausgehend von der funktionalen bzw. betriebsrelevanten Steuervorrichtung der Ladeanschlussvorrichtung, oder ausgehend von einer externen Kommunikationsquelle, kann dadurch zuverlässig hintan gehalten werden.

Weiters kann es zweckmäßig sein, wenn die Display-Ansteuereinheit mess- und eichrechtlich relevante Daten im Display kennzeichnet, beispielsweise durch ein Anzeigesymbol, welches nur von der Energiemessvorrichtung ausgebbar ist, nicht aber von der Betriebssoftware der Steuervorrichtung in der Ladeanschlussvorrichtung dargestellt werden kann. Gegebenenfalls kann das ein grafisches oder textuelles Sonderzeichen sein, welches nicht in einem Standard-Zeichensatz enthalten ist. Bewusste Manipulationen oder zufällige Anzeigeinhalte, welche bei Benutzern der Ladeanschlussvorrichtung zu Verwirrungen oder Irrtümern führen könnten, werden so wirkungsvoll hintan gehalten.

Ferner kann es zweckmäßig sein, die Anzeige von nicht mess- und eichrechtlich relevanten Informationen am Display unter Anwendung von Filterfunktionen auszuführen, welche Filterfunktionen zur Eliminierung oder Sperre einer Anzeige von mess- und eichrechtlich relevanten Energie-Maßeinheiten ausgebildet sind. Solche Filterfunktion sind softwaretechnisch ideal implementierbar, nachdem die jeweiligen Filterfunktionen besonders flexibel beispielsweise an länderspezifische Regulierungen oder an unterschiedliche Sprachen angepasst werden können. Die am Display der Ladeanschlussvorrichtung zusätzlich anzeigbaren, nicht mess- und eichrechtlich relevanten Informationen können somit nie mit mess- und eichrechtlich relevanten Informationen, insbesondere Energiemessdaten, verwechselt werden.

Insbesondere kann es vorteilhaft sein, wenn die Display-Ansteuereinheit dazu eingerichtet ist, mess- und eichrechtlich relevante Energie-Maßeinheiten, beispielsweise die Zeichenfolge "kWh" oder "Wh", wegzufiltern oder gegen andere Zeichen zu ersetzen, wenn diese Energie-Maßeinheit oder die jeweilige Zeichenfolge nicht von der Energiemessvorrichtung übergeben wurde. Anzeigetexte die eine Verwechslungsgefahr mit mess- und eichrechtlich relevanten Daten bzw. Maßeinheiten darstellen würden, können so zuverlässig ausgeschlossen werden.

Gemäß einer Weiterbildung kann vorgesehen sein, dass die Display-Ansteuereinheit die Anzeige der mess- und eichrechtlich relevanten Energiemessdaten am Display beendet oder unterbindet, wenn bzw. sobald eine vordefinierte Anzeigezeitdauer nach Beendigung eines Ladevorganges eines Benutzers der Ladeanschlussvorrichtung verstrichen ist. Dadurch kann ein Ausspionieren bzw. eine Datenverwertung durch Dritte in Zusammenhang mit den jeweiligen Energiebezügen oder dem Gesamt-Energiebezug an der Ladeanschlussvorrichtung wirksam vereitelt werden. Insbesondere kann dadurch ein gewisser Schutz vor einem Aus- bzw. Ablesen der jeweiligen Energiemessdaten durch beliebige Dritte erreicht werden.

Darüber hinaus kann vorgesehen sein, dass nach dem Verstreichen der vordefinierten Anzeigezeitdauer fortwährend nicht mess- und eichrechtlich relevante Informationen am Display anzeigbar sind bzw. angezeigt werden. Dadurch kann in die Ladeanschlussvorrichtung in vorteilhafter Weise sonstige Information visualisieren, beispielsweise Statusinformationen, Begrüßungstexte, Werbebotschaften, aktuelle Preise oder Tarife betreffend den Bezug von elektrischer Energie an der Ladeanschlussvorrichtung, oder dergleichen. Die Funktionalität der Ladeanschlussvorrichtung kann so nochmals gesteigert werden.

Gemäß einer besonderen Ausprägung ist die Display-Ansteuereinheit durch einen programmgesteuerten Messdaten-Verwaltungscontroller der Energiemessvorrichtung gebildet, der auch die mess- und eichrechtlich relevanten Funktionen der Energiemessvorrichtung umsetzt. Dadurch ist die Display-Ansteuereinheit Bestandteil der mess- und eichrechtlich evaluierten bzw. zertifizierten Energiemessvorrichtung und somit separiert bzw. abgekoppelt von der funktionalen, zentralen Steuervorrichtung der Ladeanschlussvorrichtung. Dadurch ist es möglich, nicht die gesamte Steuer- bzw. Betriebssoftware der Ladeanschlussvorrichtung als mess- und eichrechtlich relevanten Teil zulassen zu müssen. Eventuell notwendige Softwareaktualisierungen an der Betriebs-Steuervorrichtung erfordern somit keine mess- und eichrechtlich relevanten Zertifizierungen. Die verwaltungstechnische Komplexität und die laufenden Kosten der Ladeanschlussvorrichtung können dadurch gering gehalten werden.

Entsprechend einer vorteilhaften Weiterbildung ist vorgesehen, dass die Energiemessvorrichtung, insbesondere deren Mess- und Auswertungssoftware, nach länderspezifischen Eichgesetzen und/oder Messrichtlinien zertifiziert und/oder bewertet ist und somit die Konformität zu den jeweiligen nationalen Richtlinien, Normen und Gesetze bestätigt ist. Dadurch kann gewährleistet werden, dass die Energiemessvorrichtung messtechnischen und/oder eichrechtlichen Anforderungen entspricht und der Bezug von elektrischer Energie sowohl für den Betreiber, als auch für den Kunden bzw. Benutzer der Ladeanschlussvorrichtung rechtskonform ablaufen kann.

Insbesondere kann es vorteilhaft sein, wenn die Steuervorrichtung in ihren Abläufen und Funktionen zumindest teilweise durch Betriebssoftware gesteuert oder beeinflusst ist und diese Betriebssoftware in eichrechtlicher und/oder messtechnischer Hinsicht nicht zertifiziert ist, sodass hier keine Konformität zu den jeweiligen nationalen Gesetzen und Richtlinien bezüglich der Energiemessung besteht. Die Betriebssoftware für den Betrieb bzw. den grundlegenden Funktionsumfang der Ladeanschlussvorrichtung kann dadurch relativ einfach aktualisiert bzw. häufiger upgedatet werden. Änderungen in der Betriebssoftware der Ladeanschlussvorrichtung müssen dadurch nicht zwingend einer aufwändigen Neu-Zertifizierung unterzogen werden. Eichrechtlich relevante Softwarebestandteile in der Energiemessvorrichtung in Zusammenhang mit einer exakten bzw. rechtskonformen Messung und Erfassung des Energiebezuges bleiben durch diese Maßnahmen von einem Update der Betriebssoftware unberührt. Die Kosten und allfällige Komplikationen in Zusammenhang mit notwendigen bzw. gewünschten Softwareupdates an der Ladeanschlussvorrichtung können so möglichst gering gehalten werden.

Ferner kann vorgesehen sein, dass die Energiemessvorrichtung und die Steuervorrichtung jeweils eigene Mikrocontroller mit jeweils eigener Firmware aufweisen. Dadurch sind zwei getrennte bzw. baulich eigenständige Funktionskomponenten vorhanden, wodurch eine Umsetzung von messtechnischen Anforderungen und/oder eichrechtlichen Regulierungen erleichtert werden kann.

Darüber hinaus kann vorgesehen sein, dass die am Display anzuzeigenden, mess- und eichrechtlich relevanten Energiemessdaten durch einen Gesamt-Energieverbrauch seit Inbetriebnahme der Energiemessvorrichtung und/oder durch eine Energie-Bezugsmenge je Ladevorgang gebildet sind. Dadurch kann von einem Benutzer jederzeit kontrolliert bzw. evaluiert werden, welche Energiemenge im Zuge des jeweiligen Ladevorganges bezogen wurde. Nachdem das Display unmittelbar von der Energiemessvorrichtung angesteuert ist, welche Energiemessvorrichtung vorzugsweise mess- bzw. eichrechtlich zertifiziert ist, ist eine betrügerische Manipulation der Anzeigeinhalte oder eine Irreführung des jeweiligen Benutzers unmöglich oder zumindest stark erschwert.

Vorteilhaft ist auch eine Ausprägung, gemäß welcher vorgesehen sein kann, dass das Display durch ein Punktmatrix-Display mit einer gleichzeitig darstellbaren Zeichenanzahl von bis zu 16 Zeichen, vorzugsweise von bis zu 6 Zeichen, insbesondere in 5.1-Darstellung, gebildet ist. Dadurch ist ein kostengünstige; technisch zuverlässig ansteuerbare Anzeigeeinheit ausgebildet. Längere Texte können bei Bedarf problemlos auch gescrollt werden bzw. als Lauftext dargestellt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform der Ladeanschlussvorrichtung in perspektivischer Ansicht auf die Gehäusevorderseite;
- Fig. 2: ein beispielhaftes Blockschaltbild zur Veranschaulichung von Komponenten und Funktionalitäten der Ladeanschlussvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

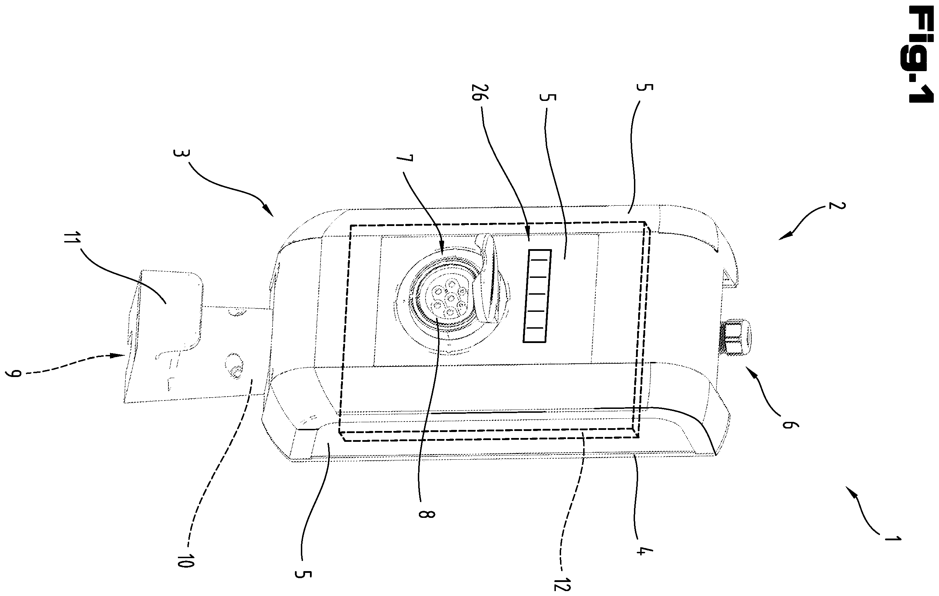

In den Fig. 1 ist eine beispielhafte Ausführungsform einer Ladeanschlussvorrichtung 1 für Elektrofahrzeuge veranschaulicht. Diese Ladeanschlussvorrichtung 1 ist zum Aufladen bzw. Regenerieren eines Energiespeichers, insbesondere einer oder mehrerer Batterien, eines Elektrofahrzeuges vorgesehen, wobei die Ladeanschlussvorrichtung 1 das Bindeglied zwischen einem ortsfesten Stromversorgungsnetz und einer Ladevorrichtung bzw. des Energiespeichers des Elektrofahrzeugs bildet. Die Ladevorrichtung des Energiespeichers kann dabei als Bestandteil der Ladeanschlussvorrichtung 1 ausgebildet sein. In den derzeit üblichen Ausführungsformen ist die Ladevorrichtung jedoch vorzugsweise im Elektrofahrzeug selbst eingebaut. Die Ladeanschlussvorrichtung 1 stellt dann eine Art intelligente Stromtankstelle für Elektrofahrzeuge dar.

Die gezeigte Ladeanschlussvorrichtung 1 umfasst ein Gehäuse 2, welches seinerseits aus einem vorderen Gehäuseteil 3 und einem hinteren Gehäuseteil 4 gebildet ist, wobei der hintere Gehäuseteil 4 ortsfest, beispielsweise an einer Hauswand oder einer Säule, montiert ist und der vordere Gehäuseteil 3 bedarfsweise von dem hinteren Gehäuseteil 4 abgenommen werden kann. Im vorliegenden Ausführungsbeispiel ist der vordere Gehäuseteil 3 aus mehreren, weiteren Gehäuseteilen 5 gebildet.

An einer Oberseite des Gehäuses 2 ist eine erste Schnittstelle 6 zur Entnahme von elektrischer Energie aus dem ortsfesten Stromversorgungsnetz angeordnet. Über diese erste Schnittstelle 6 bezieht die Ladeanschlussvorrichtung 1 die elektrische Energie aus dem Stromversorgungsnetz, wobei im vorliegenden Ausführungsbeispiel die erste Schnittstelle 6 als fix verdrahtete Leitungsschnittstelle ausgeführt ist. Um die typischerweise benötigte, elektrische Leistung in die Ladeanschlussvorrichtung 1 bzw. von dort weiter zum Elektrofahrzeug übertragen zu können, sind elektrische Kabel mit einem Leitungsquerschnitt von zumindest 4 mm² vorgesehen.

Zur Abgabe der elektrischen Energie an das Elektrofahrzeug ist beispielsweise an einer Vorderseite des Gehäuses 2 zumindest eine zweite Schnittstelle 7 ausgebildet. Diese zumindest eine zweite Schnittstelle 7 umfasst eine Steckbuchse 8, in welche ein Stecker eines Ladekabels eines Elektrofahrzeugs eingeführt und verriegelt werden kann. Bei der dargestellten Ladeanschlussvorrichtung 1 ist an einer Unterseite des Gehäuses 2 eine weitere, zweite Schnittstelle 9 vorgesehen, an welcher ein fix mit der Ladeanschlussvorrichtung 1 verdrahtetes, flexibles Ladekabel angeschlossen sein kann, wobei am freien Ende des flexiblen Ladekabels ein Stecker ausgebildet ist, welcher in eine entsprechende Steckbuchse am Elektrofahrzeug eingesteckt werden kann. Ein entsprechender Ladekabelabgang 10 für das flexible Ladekabel der weiteren, zweiten Schnittstelle 9 ist hierbei an der Unterseite des Gehäuses 2 ersichtlich. Welche der Ausführungsformen der zweiten Schnittstelle 7, 9 nun tatsächlich an der Ladeanschlussvorrichtung 1 vorhanden ist und ob nur eine oder mehrere zweite Schnittstellen 7, 9 ausgebildet sind, kann nach Bedarf festgelegt werden. Bei einer Ausführung der zumindest einen, zweiten Schnittstelle 7, 9 als flexibles Ladekabel ist zweckmäßigerweise eine Ladekabelhalterung 11 vorgesehen, auf welcher das flexible Ladekabel bei Nichtgebrauch verstaut werden kann. Typischerweise sind die als Steckbuchse 8 ausgeführte zweite Schnittstelle 7 und die als Kabelabgang ausgeführte zweite Schnittstelle 9 als Alternativen an der Ladeanschlussvorrichtung 1 vorgesehen.

Das Gehäuse 2 der Ladeanschlussvorrichtung 1 umschließt eine Mehrzahl von elektrotechnischen bzw. elektronischen Komponenten, welche auf wenigstens einer Leiterplatte 12 angeordnet bzw. fixiert sein können und/oder anderweitig im Gehäuse gehaltert und verdrahtet sein können. Die elektrotechnischen bzw. elektronischen Komponenten steuern und/oder überwachen unter anderem den Ladevorgang des Elektrofahrzeuges und können weiters für die Gewährleistung der elektrotechnischen Sicherheit der Ladeanschlussvorrichtung vorgesehen sein. Im Zuge der Steuerung bzw. Überwachung des Ladevorgangs ist es ebenso nötig, verschiedene Messungen, beispielsweise zur Bestimmung der Stromstärke des an das Elektrofahrzeug übertragenen Stromes, vorzunehmen. Die dazu nötigen, elektrotechnischen bzw. elektronischen Komponenten können ebenso auf der wenigstens einen Leiterplatte 12 vorhanden sein.

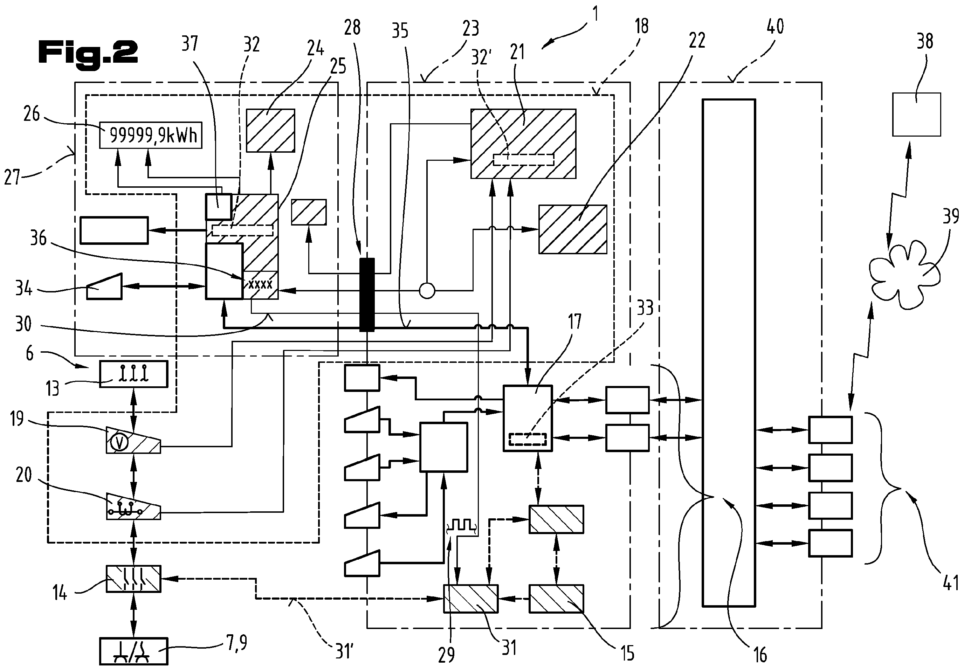

In Fig. 2 ist ein schematisches Blockschaltbild in Zusammenhang mit beispielhaft angeführten elektrotechnischen bzw. elektronischen Komponenten der Ladeanschlussvorrichtung 1 gezeigt. Diese umfassen insbesondere Anschlussklemmen 13 zum Verbinden einer Kabelzuleitung mit der ersten Schnittstelle 6 der Ladeanschlussvorrichtung 1, eine Leistungsschaltvorrichtung 14, beispielsweise einen Schütz oder einen Leistungs-Halbleiterschalter zum Herstellen bzw. Trennen einer elektrischen Verbindung zwischen der ersten Schnittstelle 6 und der zweiten Schnittstelle 7 bzw. der weiteren zweiten Schnittstelle 9 der Ladeanschlussvorrichtung 1, gegebenenfalls eine Fehlerstrom-Überwachungsvorrichtung 15, welche bei einem Fehlerstrom bzw. Erdschluss im Stromversorgungsnetz von der Ladeanschlussvorrichtung 1 bis zum Elektrofahrzeug den Stromkreis unterbricht, und eine zentrale Steuervorrichtung 16, welche vorzugsweise einen ersten Mikrocontroller 17 umfasst, der einzelne elektrotechnische bzw. elektronische Komponenten steuert bzw. mit diesen kommuniziert.

Die Ladeanschlussvorrichtung 1 umfasst weiters eine rein elektrotechnisch implementierte Energiemessvorrichtung 18 zum Messen der über die Ladeanschlussvorrichtung 1 an ein Elektrofahrzeug abgegebenen elektrischen Energie. Eine solche rein elektrotechnische Energiemessvorrichtung 18 ist im Gegensatz zu einem elektromechanischen Energiezähler kompakt und leichtgewichtig.

Die Energiemessvorrichtung 18 umfasst zumindest einen Spannungsgeber 19 je elektrischer Phase bzw. je elektrischem Pfad zur Leistungsschaltvorrichtung 14 und zumindest einen Stromwandler 20 je elektrischer Phase bzw. je elektrischem Pfad zur Leistungsschaltvorrichtung 14. Der zumindest eine Spannungsgeber 19 und der zumindest eine Stromwandler 20 sind mit einem Mess-Controller 21 verbunden und übergeben so die jeweiligen Spannungs- bzw. Stromwerte an den Mess-Controller 21. Der Mess-Controller 21 errechnet aus den übergebenen Signalen bzw. Werten die jeweils übertragene bzw. bezogene, elektrische Energiemenge.

Eine nicht-flüchtige Kalibrierdaten-Speichervorrichtung 22, insbesondere ein EEPROM-Speicher, ist ebenso wie die Steuervorrichtung 16 auf einer Hauptplatine 23 angeordnet. In der Kalibrierdaten-Speichervorrichtung 22 sind die für eine genaue Messung durch die Energiemessvorrichtung 18 erforderlichen Kalibrierdaten hinterlegt. Diese Kalibrierdaten sind geräteabhängig und variieren vor allem in Abhängigkeit der elektrischen Eigenschaften der Spannungsgeber 19 und der Stromwandler 20 bzw. in Abhängigkeit der ohmschen Widerstände der Leitungsverbindungen.

Die Energiemessvorrichtung 18 umfasst weiters eine nicht-flüchtige Energiedaten-Speichervorrichtung 24. In dieser Energiedaten-Speichervorrichtung 24 sind zumindest die von Ladesitzung zu Ladesitzung kontinuierlich ansteigenden Werte des Gesamtenergiebezuges an der Ladeanschlussvorrichtung 1 hinterlegbar.

Diese Energiedaten-Speichervorrichtung 24 ist mit einem eigenständigen Messdaten-Verwaltungscontroller 25 verbunden. Dieser Messdaten-Verwaltungscontroller 25 ist weiters mit einem Display 26 an der Ladeanschlussvorrichtung 1 verbunden. Insbesondere ist dieses Display 26 unmittelbar am Gehäuse 2 angeordnet und von einem Benutzer der Ladeanschlussvorrichtung 1 ablesbar. Dieses Display 26 ist zur Anzeige von mess- und eichrechtlich relevanten Daten in Form von Klartext vorgesehen. Insbesondere ist darauf der Gesamt-Energieverbrauch seit der ersten Inbetriebnahme der Energiemessvorrichtung 18 ablesbar. Alternativ oder in Kombination dazu kann am Display 26 die jeweilige Bezugsmenge von elektrischer Energie je Ladevorgang visualisiert und von einem Benutzer abgelesen werden.

Zumindest die Energiedaten-Speichervorrichtung 24 und der Messdaten-Verwaltungscontroller 25 sind bevorzugt auf einer baulich eigenständigen Messplatine 27 angeordnet. Diese Messplatine 27 ist über eine Steckerschnittstelle 28 mit der Hauptplatine 23 elektrisch verbindbar. Vorzugsweise dient dabei die Hauptplatine 23 als Trägerplatine für die Messplatine 27.

Die Energiemessvorrichtung 18 ist dazu eingerichtet, einen Energiefluss bzw. eine Energiefreischaltung an der zweiten Schnittstelle 7 bzw. 9 zu unterbinden, wenn die Energiemessvorrichtung 18 nicht imstande ist, einen Energiebezug messtechnisch bzw. eichrechtlich exakt zu erfassen bzw. zu messen. Dies kann aufgrund von Boot-Vorgängen der Energiemessvorrichtung 18, insbesondere des Messdaten-Verwaltungscontrollers 25 auftreten. Aber auch anderweitige Beeinflussungen bzw. Störungen können dazu führen, dass eine exakte Erfassung, insbesondere eine zeitsynchrone Bereitstellung und Messung eines Energiebezuges nicht möglich ist. Für den Fall, dass die Energiemessvorrichtung 18 nicht adäquat mess- bzw. erfassungsbereit ist, kann die Energiemessvorrichtung 18 eine Aktivierung der Leistungsschaltvorrichtung 14 unterbinden und damit einen Stromfluss zu der Abgangsschnittstelle, insbesondere zur zweiten Schnittstelle 7 bzw. 9 aktiv vermeiden. Dabei hat die Energiemessvorrichtung 18 für den Fall einer einzuleitenden Unterbindung oder Verweigerung eines Energieflusses zu der wenigstens einen zweiten Schnittstelle 7 bzw. 9 steuerungstechnisch priorisierten Einfluss auf die Schaltzustände der Leistungsschaltvorrichtung 14. Insbesondere weist die Leistungsschaltvorrichtung 14 einen ersten Schaltzustand (Aktivzustand) auf, in welchem eine Bereitstellung bzw. Übertragung von elektrischer Energie an die zumindest eine zweite Schnittstelle 7 bzw. 9 ermöglicht ist. Demgegenüber ist in einem zweiten Schaltzustand (Inaktivzustand) eine Bereitstellung bzw. Übertragung von elektrischer Energie an die zumindest eine zweite Schnittstelle 7 bzw. 9 unterbindbar. Im einfachsten Fall sind die beiden Schaltstellungen durch den Aktiv- bzw. Inaktivzustand eines elektromechanischen Leistungsschalters, insbesondere eines Schaltschütz oder eines Leistungs-Halbleiterschalters, definiert. Für jene Fälle, in denen die Energiemessvorrichtung 18 nicht messbereit bzw. nicht erfassungsbereit ist, bewirkt die Energiemessvorrichtung 18 eine Herstellung oder eine Beibehaltung des zweiten Schaltzustandes, also des Inaktivzustandes der Leistungsschaltvorrichtung 14. Dadurch wird eine Energieübertragung ausgehend von der Energiemessvorrichtung 18 steuerungstechnisch bzw. automatisch unterbunden.

Dabei kann die Energiemessvorrichtung 18 zur Abgabe bzw. Bereitstellung eines steuerungstechnischen Freigabe- bzw. Sperrsignals 29 ausgebildet sein. Hierzu ist die Energiemessvorrichtung 18 mittels wenigstens einer Steuerleitung 30, insbesondere wenigstens einer Signal- bzw. Datenleitung, mit der Steuervorrichtung 16 bzw. mit deren Leistungsschalter-Ansteuereinheit 31 verbunden. Die Steuervorrichtung 16 bzw. deren Leistungsschalter-Ansteuereinheit 31 ist zur Auswertung des steuerungstechnischen Freigabe- und/oder Sperrsignals 29 und zur auswertungsabhängigen Ansteuerung der Leistungsschaltvorrichtung 14 ausgebildet. Die Steuervorrichtung 16 bzw. deren Leistungsschalter-Ansteuereinheit 31 ist dabei über wenigstens eine Steuerleitung 31' mit der Leistungsschaltvorrichtung 14 verbunden. Dadurch ist die Leistungsschaltvorrichtung 14 in Abhängigkeit der Auswertungsergebnisse des Freigabe- und/oder Sperrsignals 29 von der Steuervorrichtung 16 bzw. von der Leistungsschalter-Ansteuereinheit 31 fallspezifisch aktivier- und deaktivierbar.

Zweckmäßig ist es, wenn die Energiemessvorrichtung 18 zur Abgabe bzw. Bereitstellung eines Sperrsignals eingerichtet, wenn seitens der Energiemessvorrichtung 18 fehlende Bereitschaft zum Messen bzw. Erfassen eines Energieflusses zu der wenigstens einen zweiten Schnittstelle 7 bzw. 9 gegeben ist. Umgekehrt ist die Energiemessvorrichtung 18 zur Abgabe bzw. Bereitstellung eines Freigabesignals eingerichtet, wenn die Energiemessvorrichtung 18 funktionsbereit ist und einen Energiefluss zur zweiten Schnittstelle 7 mess- und eichrechtskonform messen bzw. erfassen kann.

Die steuerungstechnischen bzw. datentechnischen Auswertungen durch die Steuervorrichtung 16 bzw. durch die Leistungsschalter-Ansteuereinheit 31 können beispielsweise durch eine logische UND-Verknüpfung des Freigabe- bzw. Sperrsignals 29 der Energiemessvorrichtung 18 mit wenigstens einem Freigabekriterium oder einer Schaltanforderung von Seiten der Steuervorrichtung 16 umgesetzt sein. Solche Freigabekriterien von Seiten der Steuervorrichtung 16 können durch eine Erkennung eines ordnungsgemäß angeschlossenen, ladebereiten Fahrzeuges, durch eine Freigabe von Seiten der Fehlerstrom-Überwachungsvorrichtung 15 und/oder durch eine Freigabe von Seiten einer thermischen Überwachungsvorrichtung definiert sein.

Die Funktionseinheit Energiemessvorrichtung 18 der Ladeanschlussvorrichtung 1, insbesondere deren Mess- und Auswertungssoftware 32, 32', ist messtechnisch bzw. eichrechtlich zertifiziert. Insbesondere ist die Energiemessvorrichtung 18 konform zu nationalen und/oder internationalem Mess- und Eichvorschriften ausgebildet bzw. erfüllt sie die Anforderungen an länderspezifische Maß- und Eichgesetze. Demgegenüber ist eine funktionale Betriebssoftware 33, welche von der Steuervorrichtung 16 ausgeführt wird und die sonstigen Abläufe und Funktionen der Steuervorrichtung 16 bzw. der Ladeanschlussvorrichtung 1 bestimmt, nicht nach länderspezifischen Eich- und/oder Messvorschriften zertifiziert. Insbesondere ist die Betriebssoftware 33 der Ladeanschlussvorrichtung 1 vorzugsweise nicht nach länderspezifischen Gesetzen und/oder Richtlinien in Zusammenhang mit Mess- und/oder Eichgesetzen zertifiziert oder bewertet. Dadurch können umfassende Aufwendungen für derartige Bewertungen bzw. Zertifizierungen erübrigt werden. Nachdem die Betriebssoftware 33 nur funktionale Aspekte der Ladeanschlussvorrichtung 1, beispielsweise die Kommunikation mit dem Elektrofahrzeug oder eine Mensch-Maschine-Interaktion mit einem Benutzer der Ladeanschlussvorrichtung abdeckt, ist dies akzeptabel. Insbesondere wird dies durch eine Trennung von mess- und eichrechtlich relevanten Aspekten der Energiemessvorrichtung 18 von rein funktionalen bzw. betriebsablaufspezifischen Aspekten in Zusammenhang mit der Betriebssoftware 33 der Steuervorrichtung 16 vorteilhaft ermöglicht.

Die Ladeanschlussvorrichtung 1 umfasst weiters wenigstens eine Identifikationsvorrichtung 34 zur Identifizierung unterschiedlicher Benutzer der Ladeanschlussvorrichtung 1. Die Identifikationsvorrichtung 34 kann durch eine RFID-Lesevorrichtung, durch eine Pin-Tastatur, durch eine biometrische Erfassungsvorrichtung, oder dergleichen, gebildet sein. Die Energiemessvorrichtung 18 umfasst die oben genannte Energiedaten-Speichervorrichtung 24 bzw. hat die Energiemessvorrichtung 18 auf eine solche Energiedaten-Speichervorrichtung 24 Zugriff. In dieser Energiedaten-Speichervorrichtung 24 sind die jeweiligen Daten zu Ladevorgängen bzw. Energiebezügen der jeweiligen Benutzer hinterlegbar. Besonders zweckmäßig ist es dabei, wenn diese Daten betreffend Ladevorgänge der individuellen Benutzer von der Energiemessvorrichtung datentechnisch unsigniert in der Energiedaten-Speichervorrichtung 24 hinterlegbar sind bzw. hinterlegt werden. Dies erlaubt schnelle Verarbeitungs- bzw. Speicherzeiten bei relativ geringem Speicherbedarf. Vorteilhafterweise ist dabei die Energiedaten-Speichervorrichtung 24 in einem eichrechtlich relevanten Teilabschnitt der Energiemessvorrichtung 18 angeordnet. Insbesondere ist die Energiedaten-Speichervorrichtung 24 auf jener Platine angeordnet, auf welcher auch der Messdaten-Verwaltungscontroller 25 positioniert ist. Beispielsgemäß ist dies durch die gemeinsam genutzte Messplatine 27 realisiert.

Weiters ist es zweckmäßig, wenn die Energiemessvorrichtung 18 und die Steuervorrichtung 16 jeweils eigene bzw. separat zugeordnete Mikrocontroller mit jeweils eigener Firmware aufweisen. Beispielsgemäß weist die Energiemessvorrichtung 18 den Mess-Controller 21 auf, während die funktionale Steuervorrichtung 16 der Ladeanschlussvorrichtung 1 den eigenständigen Mikrocontroller 17 umfasst.

Die Energiemessvorrichtung 18 ist vorzugsweise über ein Bussystem 35, beispielsweise via CAN-Bus oder einen sonstigen seriellen Datenbus, mit der Steuervorrichtung 16 kommunikationsverbunden. Dabei ist vorgesehen, dass die Firmware der Steuervorrichtung 16 und die Firmware der Energiemessvorrichtung 18 auch ohne Datenverbindung zwischen der Steuervorrichtung 16 und der Energiemessvorrichtung 18 lauffähig sind. Dadurch wird ein möglichst rückwirkungsfreier, prinzipiell autarker Betrieb der jeweiligen Einheiten ermöglicht.

Eine überwiegend programmgesteuerte bzw. softwaretechnische Implementierung in der Ladeanschlussvorrichtung 1 sieht vor, dass die Steuervorrichtung 16 dazu eingerichtet ist, vor jedem Start eines Ladevorganges eine datentechnische Kennung 36 der Energiemessvorrichtung 18, beispielsweise eine eineindeutige Seriennummer, auszulesen und auf Gültigkeit zu überprüfen. Von der Steuervorrichtung 16 bzw. Energiemessvorrichtung 18 ist dabei ein Start eines Ladevorganges unterbindbar, wenn diese datentechnische Kennung 36 als ungültig erkannt wird oder unbekannt ist. Manipulationen bzw. unerlaubte Zuordnungen zwischen einer manipulierten Energiemessvorrichtung 18 und/oder einer manipulierten Steuervorrichtung 16 können dadurch erschwert bzw. hintangehalten werden.

Das Display 26 am Gehäuse 2 der Ladeanschlussvorrichtung 1 ist einerseits zur Anzeige von mess- und eichrechtlich relevanten Energiemessdaten der Energiemessvorrichtung 18 und andererseits auch zur Anzeige von Informationen eingerichtet, welche Informationen nicht von der Energiemessvorrichtung 18 stammen und nicht mess- und eichrechtlich relevant sind. Hierzu ist eine Display-Ansteuereinheit 37 in der Ladeanschlussvorrichtung 1 implementiert, welche dazu eingerichtet ist, eine Anzeige von dem Mess- und Eichrecht unterliegenden Informationen, insbesondere von mess- und eichrechtlich relevanten Inhalten oder Symbolen, automatisiert zu unterdrücken, zu ersetzen oder solche Inhalte oder Symbole als nicht mess- und eichrechtskonform zu kennzeichnen, wenn diese Inhalte oder Symbole nicht von der Energiemessvorrichtung 18 stammen bzw. nicht von ihr erstellt wurden.

Beispielsweise dann, wenn mess- und eichrechtlich relevante Inhalte oder Symbole ausgehend von der funktionalen Steuervorrichtung 16 an das Display 26 übertragen werden, werden diese automatisch bzw. zwangsweise den vorstehend genannten Restriktionen unterworfen. Entsprechendes gilt, wenn derartige Inhalte oder Symbole von einer peripheren Einheit bzw. Datenquelle stammen. Insbesondere kann eine datentechnische Vernetzung einer Mehrzahl von Ladeanschlussvorrichtungen 1 mit einem zentralen Verwaltungssystem 38 vorgesehen sein. Die datentechnische Kommunikation zwischen den jeweiligen Ladeanschlussvorrichtungen 1 und dem zentralen Verwaltungssystem 38, insbesondere einem sogenannten Backend-System, kann beispielsweise via das Internet 39 vorgesehen sein. Hierfür umfasst die Ladeanschlussvorrichtung 1 eine erweiterte Kommunikationsbaugruppe 40 mit wenigstens einer datentechnischen Kommunikationsschnittstelle 41 zur Fernkommunikation mit dem zentralen Verwaltungssystem 38.

Die Display-Ansteuereinheit 37 ist vorzugsweise softwaretechnisch implementiert bzw. durch Firmware der Energiemessvorrichtung 18, insbesondere durch Firmware des Messdaten-Verwaltungscontrollers 25 gebildet. Die Display-Ansteuereinheit 37 ist damit integraler Bestandteil der mess- und eichrechtlich zertifizierten Energiemessvorrichtung 18. Die Display-Ansteuereinheit 37 kann dadurch von einer autorisierten Stelle, beispielswese vom herstellenden Unternehmen, flexibel auf länderspezifische Anforderungen bzw. Vorgaben eingestellt werden. Nach der Auslieferung ist jedoch die Ladeanschlussvorrichtung 1 bzw. deren Energiemessvorrichtung 18 zuverlässig vor nicht-autorisierten Veränderungen geschützt. Alternativ oder in Kombination dazu ist durch die softwaretechnische Umsetzung der Display-Ansteuereinheit 37 ein vielfältiger Funktionsumfang erzielbar.

Das Ausführungsbeispiel zeigt mögliche Ausführungsvarianten, wobei an dieser Stelle bemerkt sei, dass die Erfindung nicht auf die speziell dargestellten Ausführungsvarianten eingeschränkt ist und nicht alle der dargestellten Ausführungsvarianten umfassen muss. Zudem sind diverse Kombinationen der einzelnen Ausführungsvarianten untereinander möglich sind und liegt diese Variationsmöglichkeit aufgrund der Lehre zum technischen Handeln durch gegenständliche Erfindung im Können des auf diesem technischen Gebiet tätigen Fachmannes.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Ladeanschlussvorrichtung | 29 | Freigabe- und/oder Sperrsignal |
| 2 | Gehäuse | 30 | Steuerleitung |
| 3 | vorderes Gehäuseteil | 31 | Leistungsschalter-Ansteuereinheit |
| 4 | hinteres Gehäuseteil | 31' | Steuerleitung |
| 5 | weitere Gehäuseteile | 32, 32' | Mess- und |
| 6 | erste Schnittstelle | | Auswertungssoftware |
| 7 | zweite Schnittstelle | 33 | Betriebssoftware |
| 8 | Steckbuchse | 34 | Identifikationsvorrichtung |
| 9 | zweite Schnittstelle | 35 | Bussystem |
| 10 | Ladekabelabgang | 36 | datentechnische Kennung |
| 11 | Ladekabelhalterung | 37 | Display-Ansteuereinheit |
| 12 | Leiterplatte | 38 | zentrales Verwaltungssystem |
| 13 | Anschlussklemmen | 39 | Internet |
| 14 | Leistungsschaltvorrichtung | 40 | Kommunikationsbaugruppe |
| 15 | Fehlerstrom-Überwachungsvorrichtung | 41 | Kommunikationsschnittstelle |
| 16 | Steuervorrichtung | | |
| 17 | erster Mikrocontroller | | |
| 18 | Energiemessvorrichtung | | |
| 19 | Spannungsgeber | | |
| 20 | Stromwandler | | |
| 21 | Mess-Controller | | |
| 22 | Kalibrierdaten-Speichervorrichtung | | |
| 23 | Hauptplatine | | |
| 24 | Energiedaten-Speichervorrichtung | | |
| 25 | Messdaten-Verwaltungscontroller | | |
| 26 | Display | | |
| 27 | Messplatine | | |
| 28 | Steckerschnittstelle | | |

## Patentansprüche

1. Ladeanschlussvorrichtung (1) für Elektrofahrzeuge, umfassend
- zumindest eine erste Schnittstelle (6) zum Beziehen von elektrischer Energie aus einem ortsfesten Stromversorgungsnetz,
- zumindest eine zweite Schnittstelle (7, 9) zur gesteuerten Abgabe von elektrischer Energie an ein Elektrofahrzeug,
- eine elektronische Steuervorrichtung (16) mit welcher ein Ladevorgang eines Elektrofahrzeugs überwachbar und/oder beeinflussbar ist,
- eine Leistungsschaltvorrichtung (14) mit einem ersten Schaltzustand in welchem eine Bereitstellung von elektrischer Energie an der zumindest einen zweiten Schnittstelle (7, 9) freischaltbar ist und mit einem zweiten Schaltzustand in welchem eine Bereitstellung von elektrischer Energie an der zumindest einen zweiten Schnittstelle unterbindbar ist,
- eine Energiemessvorrichtung (18) zum Messen der über die Ladeanschlussvorrichtung (1) an ein Elektrofahrzeug abgegebenen elektrischen Energie,
- ein Display (26) zur Anzeige von mess- und eichrechtlich relevanten Energiemessdaten, welche Energiemessdaten von der Energiemessvorrichtung (18) gemessen wurden,
- ein Gehäuse (2) in welchem wenigstens die elektronische Steuervorrichtung (16) und die Leistungsschaltvorrichtung (14) und gegebenenfalls die Energiemessvorrichtung (18) untergebracht sind, und an welchem Gehäuse (2) das Display (26) zur Anzeige der mess- und eichrechtlich relevanten Energiemessdaten angeordnet ist, wobei
das Display (26) zudem zur Anzeige von Informationen eingerichtet ist, welche Informationen nicht von der Energiemessvorrichtung (18) stammen und nicht mess- und eichrechtlich relevant sind,
**dadurch gekennzeichnet, dass**
eine Display-Ansteuereinheit (37) ausgebildet ist, welche dazu eingerichtet ist, eine Anzeige von dem Mess- und Eichrecht unterliegenden Inhalten oder Symbolen an dem Display (26) zu unterdrücken, zu ersetzen oder solche Inhalte oder Symbole als nicht mess- und eichrechtskonform zu kennzeichnen, wenn diese Inhalte oder Symbole nicht von der Energiemessvorrichtung (18) stammen oder nicht von der Energiemessvorrichtung (18) erstellt wurden.

2. Ladeanschlussvorrichtung nach Anspruch 1, **dadurch gekennzeichnet, dass** das Display (26) zur Anzeige des Betriebsstatus der Ladeanschlussvorrichtung (1), beispielsweise Bereit, Laden, Fehlerzustand, und/oder zur Anzeige von Handhabungshinweisen vorgesehen ist, welche Anzeigeinhalte von der Steuervorrichtung (16) und/oder von einem externen, datentechnischen Verwaltungssystem (38) stammen.

3. Ladeanschlussvorrichtung nach Anspruch 1 oder 2, **dadurch gekennzeichnet, dass** die Display-Ansteuereinheit (37) dazu eingerichtet ist, (i) mess- und eichrechtlich relevante Energiemessdaten von der Energiemessvorrichtung (18) und (ii) Informationen, welche nicht von der Energiemessvorrichtung (18) stammen und nicht mess- und eichrechtlich relevant sind, abwechselnd am Display (26) anzuzeigen.

4. Ladeanschlussvorrichtung nach Anspruch 3, **dadurch gekennzeichnet, dass** die Display-Ansteuereinheit (37) dazu eingerichtet ist, die mess- und eichrechtlich relevanten Energiemessdaten regelmäßig und mit einer Mindestanzeigedauer am Display (26) anzuzeigen.

5. Ladeanschlussvorrichtung nach einem der vorhergehenden Ansprüche, **dadurch gekennzeichnet, dass** die Display-Ansteuereinheit (37) dazu eingerichtet ist, mess- und eichrechtlich relevante Daten im Display (26) zu kennzeichnen, beispielsweise durch ein Anzeigesymbol, welches nur von der Energiemessvorrichtung (18) ausgebbar ist.

6. Ladeanschlussvorrichtung nach einem der vorhergehenden Ansprüche, **dadurch gekennzeichnet, dass** die Display-Ansteuereinheit (37) dazu eingerichtet ist, die Anzeige von nicht mess- und eichrechtlich relevanten Informationen am Display (26) unter Anwendung von Filterfunktionen auszuführen, welche Filterfunktionen zur Eliminierung oder Sperre einer Anzeige von mess- und eichrechtlich relevanten Energie-Maßeinheiten ausgebildet sind.

7. Ladeanschlussvorrichtung nach Anspruch 6, **dadurch gekennzeichnet, dass** die Display-Ansteuereinheit (37) dazu eingerichtet ist, mess- und eichrechtlich relevante Energie-Maßeinheiten, beispielsweise die Zeichenfolge "kWh" oder "Wh", wegzufiltern oder gegen andere Zeichen zu ersetzen, wenn diese Energie-Maßeinheit oder die jeweilige Zeichenfolge nicht von der Energiemessvorrichtung (18) übergeben wurde.

8. Ladeanschlussvorrichtung nach einem der vorhergehenden Ansprüche, **dadurch gekennzeichnet, dass** die Display-Ansteuereinheit (37) dazu eingerichtet ist, die Anzeige der mess- und eichrechtlich relevanten Energiemessdaten am Display (26) zu beenden oder zu unterbinden, wenn eine vordefinierte Anzeigezeitdauer nach Beendigung eines Ladevorganges eines Benutzers der Ladeanschlussvorrichtung (1) verstrichen ist.

9. Ladeanschlussvorrichtung nach Anspruch 8, **dadurch gekennzeichnet, dass** nach dem Verstreichen der vordefinierten Anzeigezeitdauer fortwährend nicht mess- und eichrechtlich relevante Informationen am Display (26) anzeigbar sind.

10. Ladeanschlussvorrichtung nach einem der vorhergehenden Ansprüche, **dadurch gekennzeichnet, dass** die Display-Ansteuereinheit (37) durch einen programmgesteuerten Messdaten-Verwaltungscontroller (25) der Energiemessvorrichtung (18) gebildet ist, der auch die mess- und eichrechtlich relevanten Funktionen der Energiemessvorrichtung (18) umsetzt.

11. Ladeanschlussvorrichtung nach einem der vorhergehenden Ansprüche, **dadurch gekennzeichnet, dass** die Energiemessvorrichtung (18), insbesondere deren Mess- und Auswertungssoftware (32, 32'), nach länderspezifischen Eichgesetzen und/oder Messrichtlinien zertifiziert und/oder bewertet ist.

12. Ladeanschlussvorrichtung nach einem der vorhergehenden Ansprüche, **dadurch gekennzeichnet, dass** die Steuervorrichtung (16) in ihren Abläufen und Funktionen zumindest teilweise durch Betriebssoftware (33) gesteuert und/oder beeinflusst ist und diese Betriebssoftware (33) nicht nach länderspezifischen Eichgesetzen und/oder Messrichtlinien zertifiziert und/oder bewertet ist.

13. Ladeanschlussvorrichtung nach einem der vorhergehenden Ansprüche, **dadurch gekennzeichnet, dass** die Energiemessvorrichtung (18) und die Steuervorrichtung (16) jeweils eigene Mikrocontroller (21, 25; 17) mit jeweils eigener Firmware aufweisen.

14. Ladeanschlussvorrichtung nach einem der vorhergehenden Ansprüche, **dadurch gekennzeichnet, dass** die am Display (26) anzuzeigenden, mess- und eichrechtlich relevanten Energiemessdaten durch einen Gesamt-Energieverbrauch seit Inbetriebnahme der Energiemessvorrichtung (18) und/oder durch eine Energie-Bezugsmenge je Ladevorgang gebildet sind.

15. Ladeanschlussvorrichtung nach einem der vorhergehenden Ansprüche, **dadurch gekennzeichnet, dass** das Display (26) durch ein Punktmatrix-Display mit einer gleichzeitig darstellbaren Zeichenanzahl von bis zu 16 Zeichen, vorzugsweise von bis zu 6 Zeichen gebildet ist.

## Claims

1. A charging connection device (1) for electric vehicles, comprising
- at least one first interface (6) for drawing electrical energy from a stationary power supply network,
- at least one second interface (7, 9) for the controlled delivery of electrical energy to an electric vehicle,
- an electronic control device (16) with which a charging process of an electric vehicle can be monitored and/or influenced,
- a power switching device (14) with a first switching state in which a provision of electrical energy at the at least one second interface (7, 9) can be enabled and with a second switching state in which a provision of electrical energy at the at least one second interface can be disabled,
- an energy measuring device (18) for measuring the electrical energy supplied to an electric vehicle via the charging connection device (1),
- a display (26) for displaying energy measurement data relevant under measurement and calibration law, which energy measurement data was measured by the energy measuring device (18),
- a housing (2) in which at least the electronic control device (16) and the power switching device (14) and optionally the energy measuring device (18) are accommodated, and on which housing (2) the display (26) for displaying the energy measurement data relevant under measurement and calibration law is arranged, wherein the display (26) is also configured to display information which does not originate from the energy measuring device (18) and is not relevant under measurement and calibration law,
**characterized in that**
a display control unit (37) is formed which is configured to suppress or replace a display of contents or symbols on the display (26) which are subject to measurement and calibration law, or to identify such contents or symbols as not conforming to measurement and calibration law, if these contents or symbols do not originate from the energy measuring device (18) or were not created by the energy measuring device (18).

2. The charging connection device according to claim 1, **characterized in that** the display (26) is provided for displaying the operating status of the charging connection device (1), for example ready, charging, fault status, and/or for displaying handling instructions, which display contents originate from the control device (16) and/or from an external data management system (38).

3. The charging connection device according to claim 1 or 2, **characterized in that** the display control unit (37) is configured to alternately display on the display (26) (i) energy measurement data from the energy measuring device (18) which is relevant under measurement and calibration law and (ii) information which does not originate from the energy measuring device (18) and is not relevant under measurement and calibration law.

4. The charging connection device according to claim 3, **characterized in that** the display control unit (37) is configured to display the energy measurement data relevant under measurement and calibration law regularly and with a minimum display duration on the display (26).

5. The charging connection device according to one of the preceding claims, **characterized in that** the display control unit (37) is configured to indicate data in the display (26) that is relevant under measurement and calibration law, for example by means of a display symbol which can only be output by the energy measuring device (18).

6. The charging connection device according to one of the preceding claims, **characterized in that** the display control unit (37) is configured to carry out the display of information on the display (26) that is not relevant under measurement and calibration law using filter functions, which filter functions are configured to eliminate or block a display of energy measurement units that are relevant under measurement and calibration law.

7. The charging connection device according to claim 6, **characterized in that** the display control unit (37) is configured to filter out energy measurement units relevant under measurement and calibration law, for example the character string "kWh" or "Wh", or to replace them with other characters if this energy measure or the respective character string has not been transferred by the energy measuring device (18).

8. The charging connection device according to one of the preceding claims, **characterized in that** the display control unit (37) is configured to terminate or prevent the display of the energy measurement data relevant under measurement and calibration law on the display (26) if a predefined display time period has elapsed after the end of a charging process of a user of the charging connection device (1).

9. The charging connection device according to claim 8, **characterized in that**, after the predefined display time period has elapsed, information which is not relevant in terms of measurement and calibration law can be continuously shown on the display (26).

10. The charging connection device according to one of the preceding claims, **characterized in that** the display control unit (37) is formed by a program-controlled measurement data management controller (25) of the energy measuring device (18), which also implements the functions of the energy measuring device (18) that are relevant under measurement and calibration law.

11. The charging connection device according to one of the preceding claims, **characterized in that** the energy measuring device (18), in particular its measurement and evaluation software (32, 32'), is certified and/or evaluated according to country-specific calibration laws and/or measurement guidelines.

12. The charging connection device according to one of the preceding claims, **characterized in that** the control device (16) is at least partially controlled and/or influenced in its processes and functions by operating software (33) and this operating software (33) is not certified and/or evaluated according to country-specific calibration laws and/or measurement guidelines.

13. The charging connection device according to one of the preceding claims, **characterized in that** the energy measuring device (18) and the control device (16) each have their own microcontrollers (21, 25; 17) each with their own firmware.

14. The charging connection device according to one of the preceding claims, **characterized in that** the energy measurement data to be displayed on the display (26) and relevant under measurement and calibration law are formed by a total energy consumption since commissioning of the energy measuring device (18) and/or by an energy reference quantity per charging process.

15. The charging connection device according to one of the preceding claims, **characterized in that** the display (26) is formed by a dot matrix display with a simultaneously displayable number of characters of up to 16 characters, preferably up to 6 characters.

## Revendications

1. Dispositif de raccordement de charge (1) pour véhicules électriques, comprenant :
- au moins une première interface (6) pour l'approvisionnement en énergie électrique à partir d'un réseau d'alimentation électrique local,
- au moins une deuxième interface (7, 9) pour la distribution contrôlée d'énergie électrique à un véhicule électrique,
- un dispositif de commande électronique (16) dans lequel un processus de charge d'un véhicule électrique peut être surveillé et/ou contrôlé,
- un dispositif de commutation de puissance (14) avec un premier état de commutation dans lequel une mise à disposition d'énergie électrique au niveau de l'au moins une deuxième interface (7, 9) peut être autorisée et avec un deuxième état de commutation dans lequel une mise à disposition d'énergie électrique au niveau de l'au moins une deuxième interface peut être interdite,
- un dispositif de mesure d'énergie (18) pour la mesure de l'énergie électrique distribuée à un véhicule électrique par l'intermédiaire du dispositif de raccordement de charge (1),
- un affichage (26) pour l'affichage de données de mesure d'énergie mesurées et en temps réel, ces données de mesure d'énergie ayant été mesurées par le dispositif de mesure d'énergie (18),
- un boîtier (2) dans lequel sont logés au moins le dispositif de commande électronique (16) et le dispositif de commutation de puissance (14) et, le cas échéant, le dispositif de mesure d'énergie (18) et l'affichage (26) pour l'affichage des données de mesure d'énergie mesurées et en temps réel étant disposé dans ce boîtier (2), dans lequel l'affichage (26) est conçu en outre pour l'affichage d'informations, ces informations ne provenant pas du dispositif de mesure d'énergie (18) et ne concernant pas les mesures et les données en temps réel,
**caractérisé en ce que**
une unité de commande d'affichage (37) est prévue, qui est conçue pour inhiber, remplacer un affichage des contenus de mesure et en temps réel ou de symboles sur l'affichage (26) ou d'identifier ces contenus ou symboles comme étant non conformes aux mesures et non en temps réel lorsque ces contenus ou symboles ne proviennent pas du dispositif de mesure d'énergie (18) ou n'ont pas été créées par le dispositif de mesure d'énergie (18).

2. Dispositif de raccordement de charge selon la revendication 1, **caractérisé en ce que** l'affichage (26) est prévu pour l'affichage de l'état de fonctionnement du dispositif de raccordement de charge (1), par exemple Prêt, Charge, Erreur, et/ou pour l'affichage d'instructions d'utilisation, ces contenus d'affichage provenant du dispositif de commande (16) et/ou d'un système de gestion externe de données (38).

3. Dispositif de raccordement de charge selon la revendication 1 ou 2, **caractérisé en ce que** l'unité de commande d'affichage (37) est conçue pour afficher alternativement, sur l'affichage (26), (i) des données de mesure d'énergie mesurées et en temps réel provenant du dispositif de mesure d'énergie (18) et (ii) des informations qui ne proviennent pas du dispositif de mesure d'énergie (18) et qui ne sont pas des données mesurées et en temps réel.

4. Dispositif de raccordement de charge selon la revendication 3, **caractérisé en ce que** l'unité de commande d'affichage (37) est conçue pour afficher les données de mesure d'énergie mesurées et en temps réel de manière régulière et avec une durée d'affichage minimale sur l'affichage (26).

5. Dispositif de raccordement de charge selon l'une des revendications précédentes, **caractérisé en ce que** l'unité de commande d'affichage (37) est conçue pour identifier les données de mesure et en temps réel sur l'affichage (26), par exemple à l'aide d'un symbole d'affichage qui peut être généré uniquement par le dispositif de mesure d'énergie (18).

6. Dispositif de raccordement de charge selon l'une des revendications précédentes, **caractérisé en ce que** l'unité de commande d'affichage (37) est conçue pour exécuter l'affichage d'informations ne concernant pas les mesures et non en temps réel sur l'affichage (26) à l'aide de fonctions de filtres, ces fonctions de filtres étant conçues pour éliminer ou bloquer un affichage d'unités de mesure d'énergie et en temps réel.

7. Dispositif de raccordement de charge selon la revendication 6, **caractérisé en ce que** l'unité de commande d'affichage (37) est conçue pour éliminer par filtrage les unités de mesure d'énergie et en temps réel, par exemple la suite de caractères « kWh » ou « Wh » ou pour les remplacer par d'autres caractères lorsque cette unité de mesure d'énergie ou la suite de caractères correspondante n'a pas été transmise par le dispositif de mesure d'énergie (18).

8. Dispositif de raccordement de charge selon l'une des revendications précédentes, **caractérisé en ce que** l'unité de commande d'affichage (37) est conçue pour terminer ou interdire l'affichage des données de mesure et en temps réel sur l'affichage (26) lorsqu'une durée d'affichage prédéfinie s'est écoulée après la fin d'un processus de charge d'un utilisateur du dispositif de raccordement de charge (1).

9. Dispositif de raccordement de charge selon la revendication 8, **caractérisé en ce que**, après l'écoulement de la durée d'affichage prédéfinie, des informations ne concernant pas les mesures et non en temps réel peuvent être affichées sur l'affichage (26).

10. Dispositif de raccordement de charge selon l'une des revendications précédentes, **caractérisé en ce que** l'unité de commande d'affichage (37) est constituée d'un contrôleur de gestion de données de mesure (25), contrôlé par un programme, du dispositif de mesure d'énergie (18), qui remplit également les fonctions de mesure et en temps réel du dispositif de mesure d'énergie (18).

11. Dispositif de raccordement de charge selon l'une des revendications précédentes, **caractérisé en ce que** le dispositif de mesure d'énergie (18), plus particulièrement son logiciel de mesure et d'analyse (32, 32') est certifié et/ou évalué selon des lois concernant l'étalonnage et/ou des directives de mesure nationales.

12. Dispositif de raccordement de charge selon l'une des revendications précédentes, **caractérisé en ce que** le dispositif de commande (16) est contrôlé et/ou influencé, dans ses processus et fonctions, au moins partiellement par un système d'exploitation (33) et ce logiciel d'exploitation (33) n'est pas certifié et/ou évalué selon des lois concernant l'étalonnage et/ou des directives de mesure nationales.

13. Dispositif de raccordement de charge selon l'une des revendications précédentes, **caractérisé en ce que** le dispositif de mesure d'énergie (18) et le dispositif de commande (16) comprennent chacun leurs propres micro-contrôleurs (21, 25 ; 17) avec leurs propres firmwares.

14. Dispositif de raccordement de charge selon l'une des revendications précédentes, **caractérisé en ce que** les données de mesure d'énergie mesurées et en temps réel à afficher sur l'affichage (26) sont constituées d'une consommation d'énergie totale depuis la mise en service du dispositif de mesure d'énergie (18) et/ou d'une quantité d'approvisionnement en énergie par processus de charge.

15. Dispositif de raccordement de charge selon l'une des revendications précédentes, **caractérisé en ce que** l'affichage (26) est constitué d'un affichage à matrice de points avec jusqu'à 16 caractères, de préférence 6 caractères, affichables simultanément.
